# EUROPÄISCHE PATENTSCHRIFT

(11) **EP 3 918 899 B1**
(45) Veröffentlichungstag und Bekanntmachung des Hinweises auf die Patenterteilung: **31.01.2024**
(21) Anmeldenummer: 21176461.8
(22) Anmeldetag: 28.05.2021
(51) Int. Cl.: A01C 7/12, G01F 11/24, A01C 7/08, A01C 19/02

(54) **DOSIEREINRICHTUNG ZUM DOSIEREN VON DOSIERGUT**
DOSING EQUIPMENT FOR DOSING BULK MATERIAL
DISPOSITIF DE DOSAGE PERMETTANT DE DOSER DES PRODUITS

(30) Priorität: 05.06.2020 DE 102020114992
(43) Veröffentlichungstag der Anmeldung: 08.12.2021
(73) Patentinhaber: Horsch Maschinen GmbH, 92421 Schwandorf (DE)
(72) Erfinder: Eckl, Matthias, 92421 Schwandorf (DE); Egelseer, Bastian, 92421 Schwandorf (DE)
(74) Vertreter: v. Bezold & Partner Patentanwälte - PartG mbB

(56) Entgegenhaltungen:
- EP-A1- 2 832 203
- EP-A2- 0 358 878
- EP-A2- 0 702 888
- AT-B- 387 129

## Beschreibung

Die Erfindung betrifft eine Dosiereinrichtung zum Dosieren von Dosiergut, insbesondere zum Dosieren von Saatgut in einer Drillmaschine.

Eine derartige Dosiereinrichtung für eine Verteilmaschine ist z. B. aus EP 0 358 878 A2 bekannt. Die Dosiereinrichtung ist an unterschiedliche Korngrößen des Fördergutes anpassbar und soll eine exakte Regulierung der pro Flächeneinheit abgegebenen Fördergutmengen ermöglichen. Die Verteilmaschine umfasst zumindest ein Grobdosierrad und ein Feindosierrad, welche jeweils wahlweise mit einem Kupplungselement einer Dosierwelle in Eingriff bringbar sind, welche in axialer Richtung relativ zu den Dosierrädern und einem Gehäuse verschiebbar ist.

Eine derartige Dosiereinrichtung ist beispielsweise aus EP 2 832 203 A1 bekannt und dient dort zur Dosierung von Saatgut in einer Drillmaschine. Diese bekannte Dosiereinrichtung weist zahlreiche Dosierer auf, die in einer Reihe quer zur Zugrichtung der Drillmaschine angeordnet sind. Durch die einzelnen Dosierer verläuft hierbei eine Hauptantriebswelle, die dazu dient, die Dosierräder der einzelnen Dosierer anzutreiben. Die einzelnen Dosierer können hierbei wahlweise als Fahrgassendosierer oder als Normaldosierer konfiguriert werden.

Bei einer Konfiguration eines Dosierers als Normaldosierer ist dieser drehstarr mit der Hauptantriebswelle verbunden und wird somit durch die Hauptantriebswelle angetrieben.

Zur Konfiguration eines Dosierers als Fahrgassendosierer wird dagegen die drehstarre Verbindung zwischen dem Dosierrad und der Hauptantriebswelle gelöst, so dass die Hauptantriebswelle das Dosierrad des Fahrgassendosierers nicht antreibt. Stattdessen kann das Dosierrad des Fahrgassendosierers hierbei über eine zusätzliche Vorgelegewelle angetrieben werden, die parallel zu der Hauptantriebswelle verläuft und über zwei Zahnräder mit dem Dosierrad des Fahrgassendosierers verbunden werden kann.

Ein Nachteil dieser bekannten Dosiereinrichtung besteht darin, dass die Umkonfiguration eines Dosierers als Fahrgassendosierer bzw. als Normaldosierer relativ aufwändig ist.

Ein weiterer Nachteil dieser bekannten Dosiereinrichtung besteht darin, dass eine zusätzliche Vorgelegewelle erforderlich ist.

Der Erfindung liegt deshalb die Aufgabe zugrunde, eine entsprechend verbesserte Dosiereinrichtung zu schaffen.

Diese Aufgabe wird durch eine erfindungsgemäße Dosiereinrichtung gemäß dem Hauptanspruch gelöst.

Die erfindungsgemäße Dosiereinrichtung eignet sich allgemein zum Dosieren von Dosiergut. In einem bevorzugten Ausführungsbeispiel der Erfindung ist die Dosiereinrichtung jedoch in einer Drillmaschine angeordnet und dient dort zur Dosierung von Saatgut. Der im Rahmen der Erfindung verwendete Begriff eines Dosierguts ist jedoch nicht auf Saatgut beschränkt.

Die erfindungsgemäße Dosiereinrichtung weist zunächst in Übereinstimmung mit der eingangs beschriebenen bekannten Dosiereinrichtung gemäß EP 2 832 203 A1 mehrere Dosierer auf, um das Dosiergut zu dosieren. Jeder der Dosierer enthält jeweils mindestens ein drehbares Dosierrad zum Dosieren des Dosierguts. Beispielsweise kann jeder Dosierer ein Feindosierrad und ein Normaldosierrad enthalten, was an sich aus dem Stand der Technik bekannt ist.

Darüber hinaus weist auch die erfindungsgemäße Dosiereinrichtung in Übereinstimmung mit der eingangs beschriebenen bekannten Dosiereinrichtung gemäß EP 2 832 203 A1 eine drehbare Dosiererantriebswelle auf, die dazu dient, die Dosierräder der einzelnen Dosierer anzutreiben, wobei die Dosierräder auf der gemeinsamen Dosiererantriebswelle angeordnet sind.

Die erfindungsgemäße Dosiereinrichtung zeichnet sich nun gegenüber der eingangs beschriebenen bekannten Dosiereinrichtung gemäß EP 2 832 203 A1 dadurch aus, dass die Dosiererantriebswelle axial verschiebbar ist, um in Abhängigkeit von der axialen Stellung der Dosiererantriebswelle eine von mehreren Betriebsarten der Dosiereinrichtung einzustellen. Bei der erfindungsgemäßen Dosiereinrichtung dient die Dosiererantriebswelle also nicht nur zum Rotationsantrieb der Dosierräder der einzelnen Dosierer, sondern darüber hinaus auch zur Auswahl einer von mehreren Betriebsarten.

Bei den verschiedenen auswählbaren Betriebsarten handelt es sich um einen Fahrgassenbetrieb und einen Normalbetrieb.

In dem Fahrgassenbetrieb wird mindestens einer der Dosierer als Fahrgassendosierer nicht angetrieben, damit dieser in einer Fahrgasse auf einem Acker kein Dosiergut abgibt, während die anderen Dosierer als Normaldosierer auch in dem Fahrgassenbetrieb angetrieben werden, um das Dosiergut abzugeben.

In dem Normalbetrieb wird dagegen jeder der Dosierer angetrieben, um das Dosiergut abzugeben, einschließlich des Dosierers, der als Fahrgassendosierer konfiguriert ist.

Die Dosiererantriebswelle ist hierbei vorzugsweise axial verschiebbar zwischen einer Fahrgassenstellung zur Auswahl des Fahrgassenbetriebs und einer Grundstellung zur Auswahl des Normalbetriebs.

In ihrer Grundstellung treibt die Dosiererantriebswelle dann sämtliche Dosierer an, einschließlich dem Dosierer, der als Fahrgassendosierer konfiguriert ist.

In ihrer Fahrgassenstellung treibt die Dosiererantriebswelle dagegen nur diejenigen Dosierer an, die nicht als Fahrgassendosierer konfiguriert sind, d.h. die Normaldosierer.

In einem bevorzugten Ausführungsbeispiel der Erfindung weisen die einzelnen Dosierräder oder ein mit den Dosierrädern drehstarr verbundenes separates Zahnrad jeweils eine Innenverzahnung auf, die den Antrieb der Dosierräder ermöglicht.

Die Dosiererantriebswelle weist für die einzelnen Dosierer vorzugsweise jeweils einen ersten Mitnehmer auf, wobei der erste Mitnehmer drehfest auf der Dosiererantriebswelle montiert und axial fixiert ist, so dass sich der erste Mitnehmer stets mit der Dosiererantriebswelle dreht und eine feste Axialposition auf der Dosiererantriebswelle hat. Der erste Mitnehmer trägt vorzugsweise eine Außenverzahnung, die in die Innenverzahnung des zugehörigen Dosierrads auf der Dosiererantriebswelle eingreifen kann, um das Dosierrad mitzunehmen. Vorzugsweise umgibt dieser erste Mitnehmer die Dosiererantriebswelle hülsenförmig.

Darüber hinaus weist die Dosiererantriebswelle vorzugsweise für die einzelnen Dosierer jeweils einen zweiten Mitnehmer auf, wobei der zweite Mitnehmer axial auf der Dosiererantriebswelle verschiebbar und relativ zu der Dosiererantriebswelle drehbar ist. Der zweite Mitnehmer trägt vorzugsweise ebenfalls eine Außenverzahnung, die in die Innenverzahnung des zugehörigen Dosierrads auf der Dosiererantriebswelle eingreifen kann, um das Dosierrad mitzunehmen. Auch der zweite Mitnehmer umgibt die Dosiererantriebswelle vorzugsweise hülsenförmig.

Der erste Mitnehmer und der zweite Mitnehmer weisen jeweils eine Stirnverzahnung auf, damit der drehfest auf der Dosiererantriebswelle montierte erste Mitnehmer den drehbar auf der Dosiererantriebswelle montierten zweiten Mitnehmer mitnehmen und drehen kann. Dadurch ist es möglich, dass wahlweise der erste Mitnehmer oder der zweite Mitnehmer das zugehörige Dosierrad dreht.

Darüber hinaus trägt die Dosiererantriebswellemehrere Konfigurationselemente, die den einzelnen Dosierern zugeordnet sind und festlegen, welcher der Dosierer ein Fahrgassendosierer ist.

Beispielsweise können die Konfigurationselemente formschlüssige Verbindungselemente sein, die die Dosiererantriebswelle drehstarr mit den Dosierrädern der Normaldosierer verbinden. Beispielsweise kann es sich hierbei um Bolzen handeln, die eine Verdrehung verhindern.

In dem bevorzugten Ausführungsbeispiel der Erfindung handelt sich bei den Konfigurationselementen jedoch um Distanzstücke, wobei die axiale Position der Distanzstücke entlang der Dosiererantriebswelle bestimmt, welcher der Dosierer ein Fahrgassendosierer ist.

Jedem der Dosierer ist also auf der Dosiererantriebswelle ein erster Mitnehmer, ein zweiter Mitnehmer und ein Distanzstück zugeordnet. Bei dem Fahrgassendosierer ist das Distanzstück vorzugsweise zwischen dem ersten Mitnehmer und dem zweiten Mitnehmer angeordnet. Bei den Normaldosierern ist das Distanzstück dagegen vorzugsweise neben den beiden Mitnehmern angeordnet, die unmittelbar aneinander angrenzen und durch Stirnverzahnungen drehfest miteinander verbunden sind.

In dem bevorzugten Ausführungsbeispiel der Erfindung sind die Distanzstücke jeweils Distanzhülsen, die einen axial durchgehenden Schlitz haben und deshalb seitlich auf die Dosiererantriebswelle aufgeklemmt oder von der Dosiererantriebswelle abgenommen werden können, um die Distanzhülsen an einer anderen Axialposition zu positionieren.

Die Distanzhülsen sind hierbei vorzugsweise elastisch federnd, damit die Distanzhülsen auf der Dosiererantriebswelle festgeklemmt werden können und trotzdem von der Dosiererantriebswelle abgenommen werden können.

Der axial durchgehende Schlitz in der Distanzhülse weist deshalb vorzugsweise in Umfangsrichtung eine Breite auf, die kleiner ist als der Durchmesser der Dosiererantriebswelle, um ein Aufklemmen der Distanzhülse zu ermöglichen.

Die axiale Position der Distanzhülsen bestimmt hierbei, welcher der Dosierer ein Fahrgassendosierer ist und welcher der Dosierer ein Normaldosierer ist. Die Umkonfiguration ist einfach möglich, indem die Distanzhülsen manuell abgenommen und an passender Stelle festgeklemmt werden. Hierzu ist kein Werkzeug erforderlich, so dass die Umkonfiguration einfach und schnell erfolgen kann.

Hierbei ist zu erwähnen, dass die einzelnen Distanzstücke auf ihrer äußeren Mantelfläche vorzugsweise keine Verzahnung aufweisen und die Innenverzahnung der Dosierräder deshalb auch nicht mitnehmen, wenn sich die Distanzstücke axial in Deckung mit den Innenverzahnungen der Dosierräder befinden. Die Mitnahme der Dosierräder durch die Dosiererantriebswelle erfolgt also nur, wenn sich einer der Mitnehmer mit seiner Außenverzahnung axial in Deckung mit der Innenverzahnung des zugehörigen Dosierrads befindet, nicht dagegen, wenn sich eine Distanzhülse axial in Deckung mit der Innenverzahnung des Dosierrads befindet.

In der Grundstellung der Dosiererantriebswelle sind dann vorzugsweise alle Distanzhülsen in axialer Richtung zu der Innenverzahnung der Dosierräder versetzt und die ersten Mitnehmer greifen mit ihrer Außenverzahnung in die Innenverzahnung der Dosierräder ein, so dass die Dosiererantriebswelle dann in der Grundstellung alle Dosierräder dreht, einschließlich der Dosierräder der Fahrgassendosierer.

In der axialen Fahrgassenstellung der Dosiererantriebswelle befindet sich dagegen bei den Fahrgassendosierern jeweils eine Distanzhülse in axialer Richtung innerhalb der Innenverzahnung des zugehörigen Dosierrads, so dass das zugehörige Dosierrad von der Dosiererantriebswelle nicht mitgenommen wird und auch der zugehörige Fahrgassendosierer kein Dosiergut abgibt.

Es wurde bereits vorstehend kurz erwähnt, dass der erste Mitnehmer und der zweite Mitnehmer jeweils axial einseitig oder beidseitig eine Stirnverzahnung aufweisen können, um eine drehstarre Verbindung zwischen beiden Mitnehmern zu ermöglichen.

Weiterhin ist allgemein zu erwähnen, dass die Dosierer vorzugsweise in einer Dosiererreihe nebeneinander angeordnet sind, wobei die Dosiererreihe vorzugsweise im Wesentlichen horizontal verläuft, beispielsweise rechtwinklig zur Zugrichtung der Drillmaschine. Die Dosierer können hierbei entlang der Dosiererreihe im Wesentlichen äquidistant angeordnet sein.

Weiterhin ist es möglich, dass die Dosiererreihe in zwei Teilreihen unterteilt ist, die unabhängig und getrennt voneinander einschaltbar und abschaltbar sind, um eine Halbseitenabschaltung zu ermöglichen, wie es an sich aus dem Stand der Technik bekannt ist.

Die Anzahl der Dosierer innerhalb der Dosiererreihe kann größer sein als 1, 2, 3, 4, 5, 6 oder 8, um nur einige Beispiele für die mögliche Anzahl der Dosierer zu nennen.

Die Dosiererantriebswelle ist vorzugsweise in mehreren Lagerschalen drehbar gelagert, wobei vorzugsweise an jedem der Zahnräder auf der Dosiererantriebswelle jeweils eine Lagerschale vorgesehen ist.

Es wurde vorstehend bereits erwähnt, dass die Konfiguration der einzelnen Dosierer als Fahrgassendosierer oder als Normaldosierer durch Distanzstücke erfolgen kann, die vorzugsweise baugleich sind, um einen Austausch untereinander zu ermöglichen.

Die Distanzstücke können jedoch auch unterschiedliche Längen in axialer Richtung aufweisen, wobei die axiale Länge der Distanzstücke an den axialen Abstand zwischen den Dosierern angepasst ist.

Die erfindungsgemäße Dosiereinrichtung umfasst vorzugsweise auch einen Rotationsantrieb zum Drehen der Dosiererantriebswelle und einen Linearantrieb zum axialen Verschieben der Dosiererantriebswelle.

Ferner ist noch zu erwähnen, dass sämtliche Dosierer vorzugweise ausschließlich von der gemeinsamen Dosiererantriebswelle angetrieben werden, so dass im Gegensatz zu der bekannten Drillmaschine gemäß EP 2 832 203 A1 keine zusätzliche Vorgelegewelle zum Antrieb der Fahrgassendosierer erforderlich ist.

Weiterhin ist zu erwähnen, dass die Erfindung nicht nur Schutz beansprucht für die vorstehend beschriebene erfindungsgemäße Dosiereinrichtung. Vielmehr beansprucht die Erfindung auch Schutz für eine landwirtschaftliche Maschine (z.B. Drillmaschine) mit einer solchen Dosiereinrichtung.

Neben dem vorstehend erwähnten Linearantrieb und dem ebenfalls bereits erwähnten Rotationsantrieb kann die landwirtschaftliche Maschine auch eine Steuereinrichtung aufweisen, um den Linearantrieb und/oder den Rotationsantrieb automatisch anzusteuern. Beispielsweise kann diese automatische Ansteuerung entsprechend einer Fahrgassenschaltung erfolgen und/oder entsprechend einem vorgegebenen Fahrgassenrhythmus, so dass die Dosiererantriebswelle in einer zeitlichen Abfolge entsprechend dem vorgegebenen Fahrgassenrhythmus entweder die Fahrgassenstellung oder die Grundstellung annimmt.

Darüber hinaus kann die erfindungsgemäße landwirtschaftliche Maschine ein Positionsbestimmungssystem aufweisen, um die Position der landwirtschaftlichen Maschine auf einem Acker zu bestimmen. Die Steuereinrichtung kann dann den Linearantrieb und/oder den Rotationsantrieb in Abhängigkeit von der Position der landschaftlichen Maschine auf dem Acker ansteuern. Beispielsweise kann es sich bei dem Positionsbestimmungssystem um ein satellitengestütztes Positionsbestimmungssystem handeln, wie beispielsweise das bekannte Global Positioning System (GPS).

Ferner kann die landwirtschaftliche Maschine auch einen Applikationskartenspeicher enthalten, auf dem eine Applikationskarte gespeichert ist. Die gespeicherte Applikationskarte Karte kann die gewünschte Betriebsweise der landwirtschaftlichen Maschine in Abhängigkeit von der Position der landwirtschaftlichen Maschine vorgeben. Die Steuereinrichtung liest dann die gespeicherte Applikationskarte aus und steuert den Linearantrieb und/oder den Rotationsantrieb in Abhängigkeit von der aktuellen Position der landwirtschaftlichen Maschine einerseits und in Abhängigkeit von der gespeicherten Applikationskarte andererseits aus.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.
Figur 1 zeigt eine Perspektivansicht einer erfindungsgemäßen Drillmaschine.

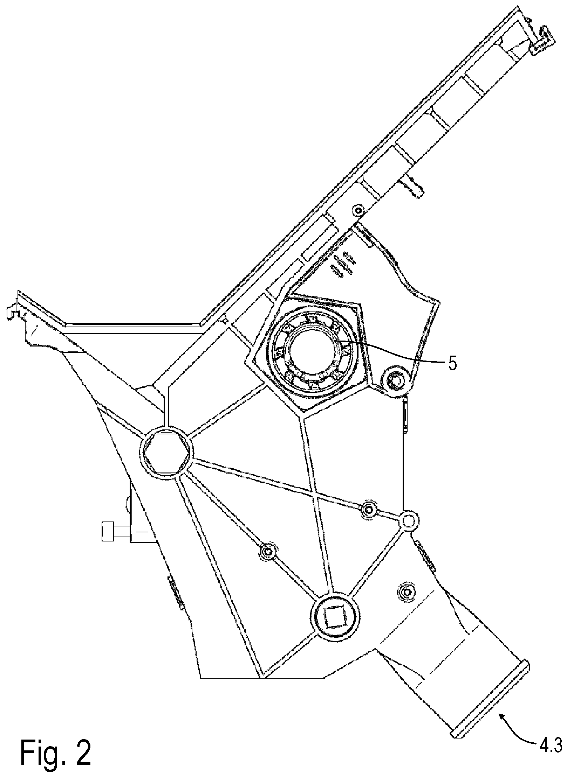

Figur 2 zeigt eine Seitenansicht der Dosiereinrichtung der Drillmaschine aus Figur 1.
Figur 3A zeigt die eine Perspektivansicht der Dosiereinrichtung in einer Grundstellung.
Figur 4A zeigt eine Rückansicht der Dosiereinrichtung in der Grundstellung.
Figur 5A zeigt eine Perspektivansicht der Dosiererantriebswelle mit den Dosierrädern in der Grundstellung.
Figur 6A zeigt eine Seitenansicht der Dosiererantriebswelle mit den Dosierrädern in der Grundstellung.

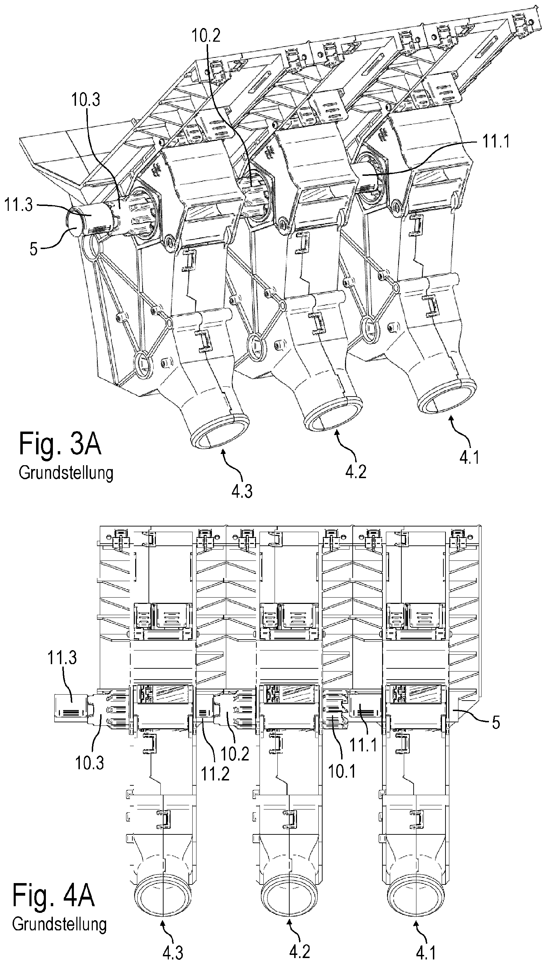

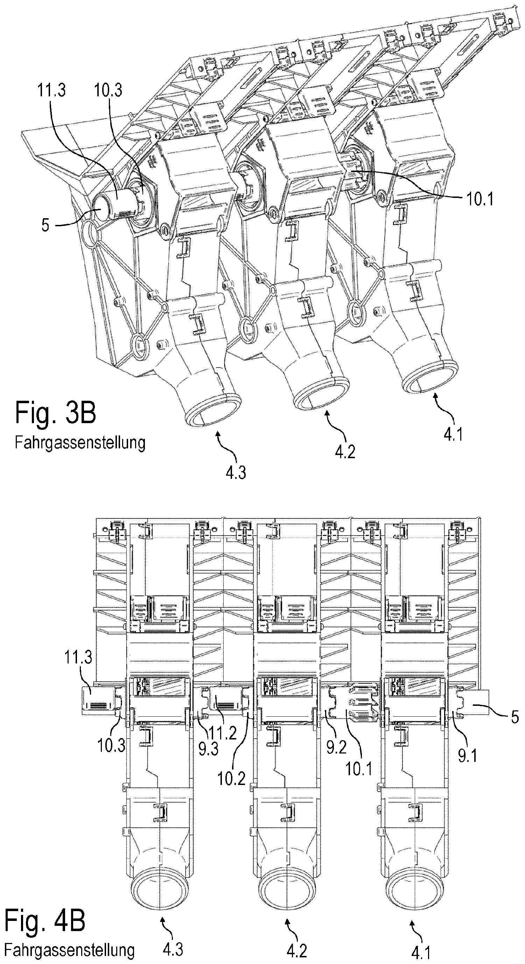

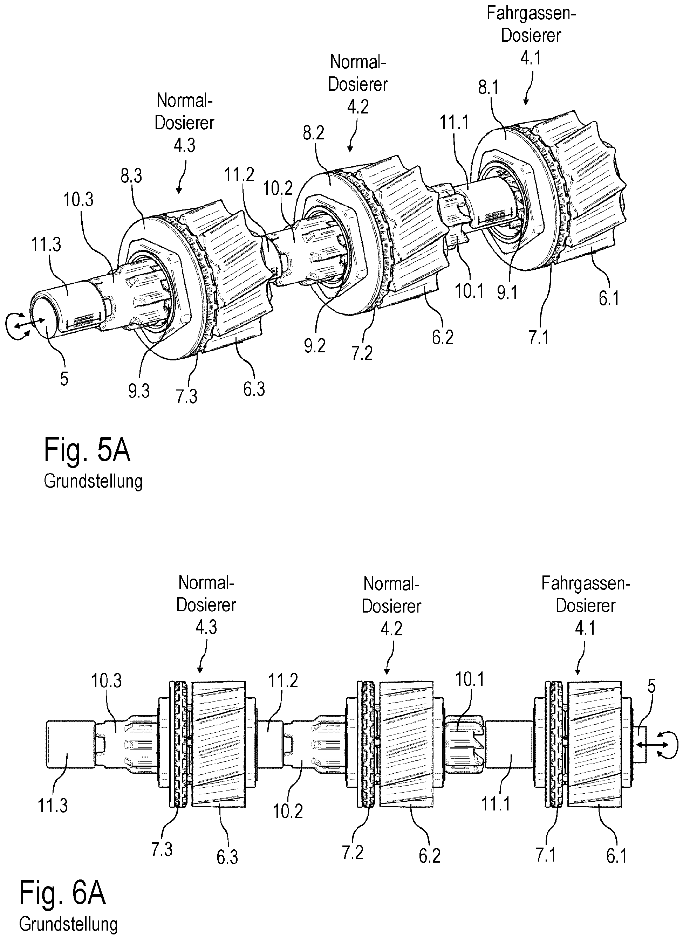

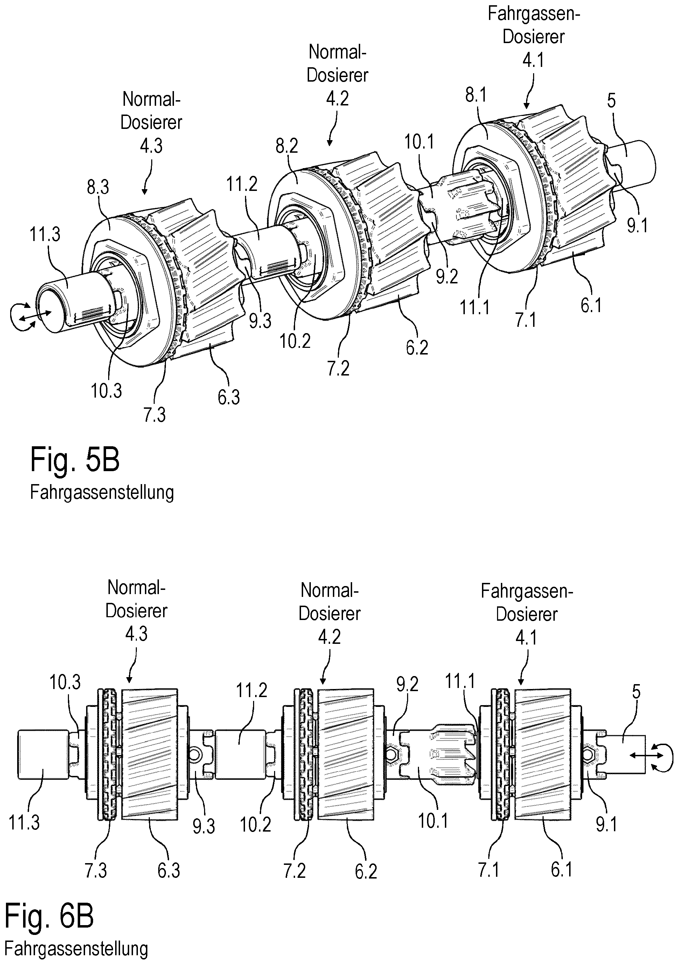

Figuren 3B-6B zeigen Darstellungen entsprechend den Figuren 3A-6A, jedoch in der Fahrgassenstellung.

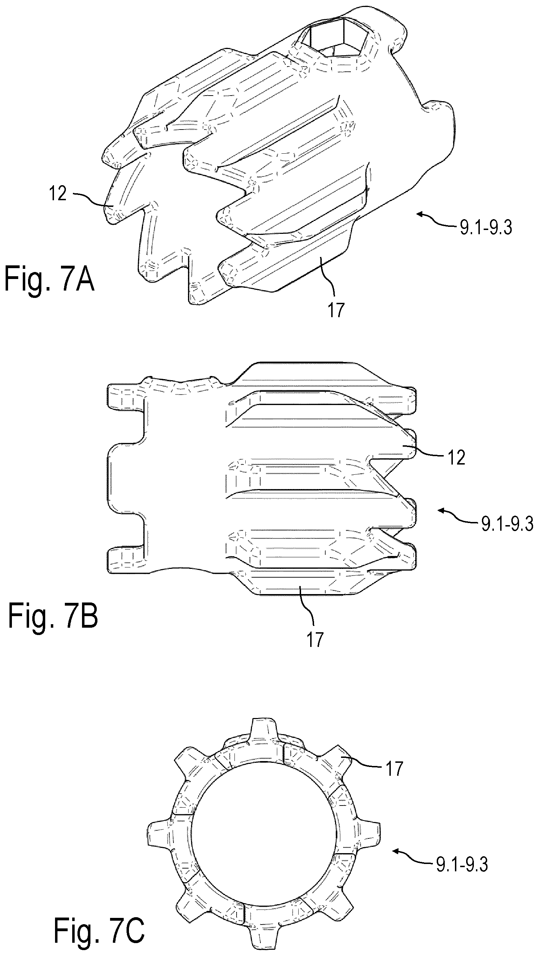

Figuren 7A, 7C zeigen verschiedene Ansichten eines ersten Mitnehmers, der drehstarr und axial fixiert auf der Dosiererantriebswelle montiert wird.

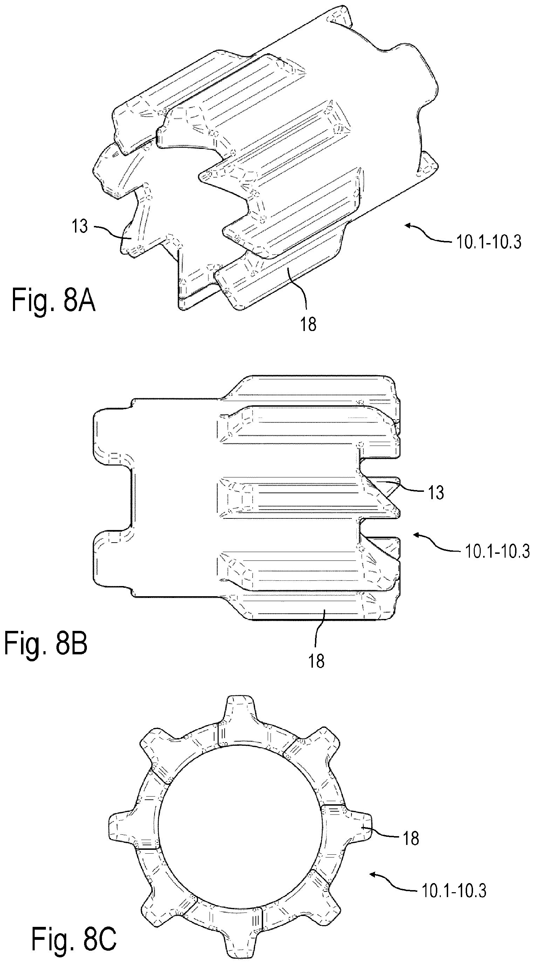

Figuren 8A, 8C zeigen verschiedene Ansichten eines zweiten Mitnehmers, der drehbar und axial verschiebbar auf der Dosiererantriebswelle montiert wird.

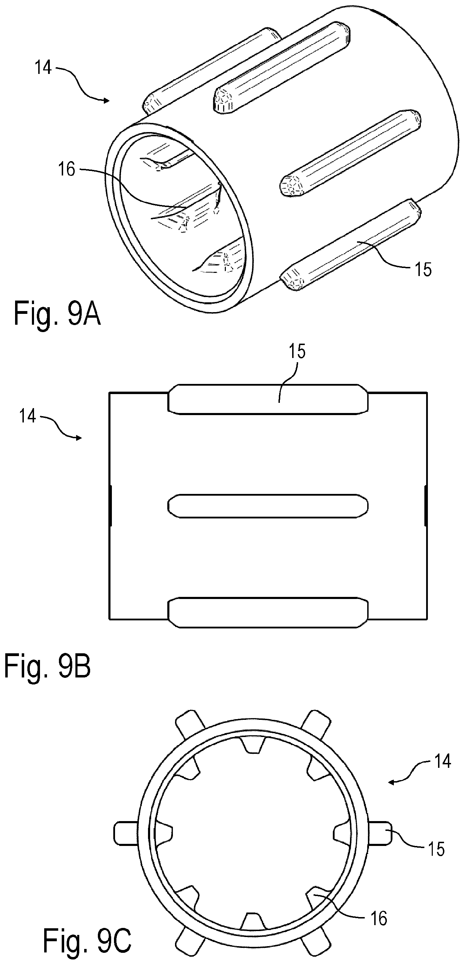

Figur 9A-9C zeigen verschiedene Ansichten einer Hohlwelle, welche die Dosierräder trägt.

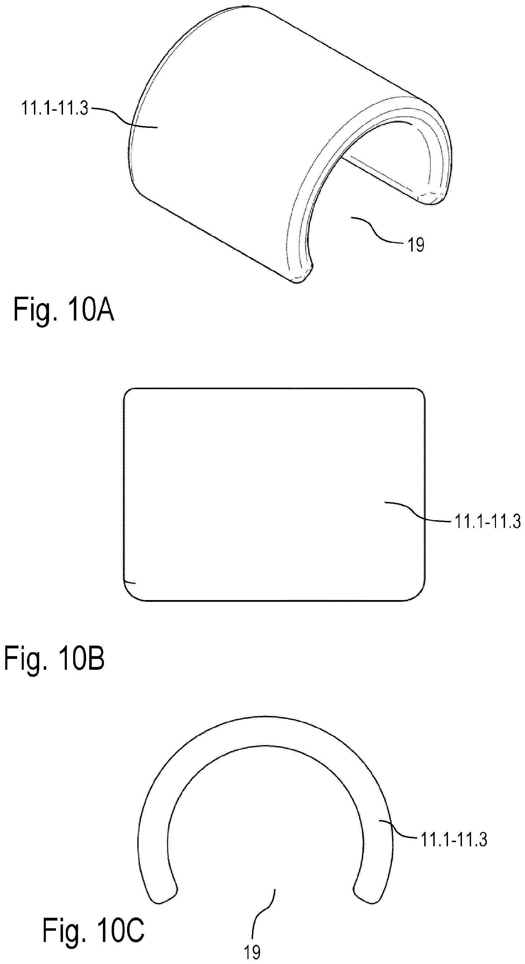

Figuren 10A-10C zeigen verschiedene Ansichten einer Distanzhülse zur Festlegung der Fahrgassendosierer.

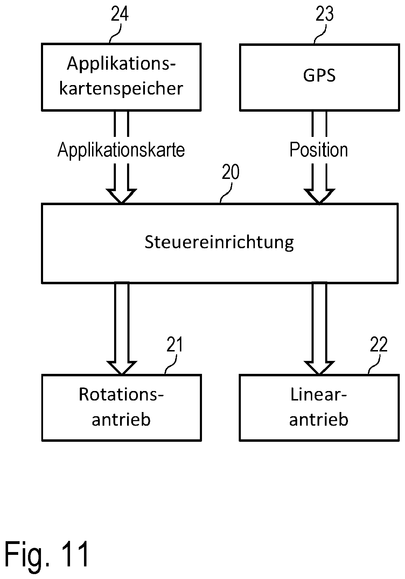

Figur 11 zeigt eine schematische Darstellung der Steuerung einer erfindungsgemäßen landwirtschaftlichen Maschine.

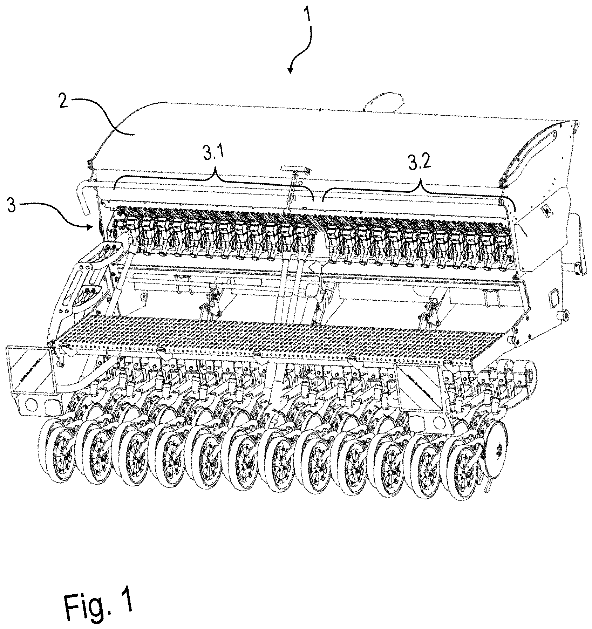

Figur 1 zeigt eine Perspektivansicht einer erfindungsgemäßen Drillmaschine 1, wie sie grundsätzlich bereits aus EP 2 832 203 A1 bekannt ist, so dass hinsichtlich des grundsätzlichen Aufbaus und der Funktionsweise der Drillmaschine 1 auf die vorstehend genannte Patentveröffentlichung verwiesen wird.

An dieser Stelle ist lediglich zu erwähnen, dass die Drillmaschine 1 einen Vorratsbehälter 2 für Saatgut aufweist. Das Saatgut wird dann von einer Dosiereinrichtung 3 dosiert, wobei die Dosiereinrichtung 3 zwei unabhängig schaltbare Dosiererreihen 3.1, 3.2 enthält, die unabhängig voneinander einschaltbar und abschaltbar sind, um eine Halbseitenabschaltung zu ermöglichen.

Die Figuren 3A, 4A und 3B, 5B zeigen verschiedene Ansichten eines Teils der Dosiereinrichtung 3 mit drei Dosierern 4.1-4.3.

Die einzelnen Dosierer 4.1-4.3 werden von einer gemeinsamen Dosiererantriebswelle 5 angetrieben, die drehbar und auch axial verschiebbar ist, wie noch detailliert beschrieben wird.

Jeder der Dosierer 4.1-4.3 erhält jeweils ein Normaldosierrad 6.1-6.3 und jeweils ein Feindosierrad 7.1-7.3, wobei an das Feindosierrad 7.1-7.3 jeweils eine Anlaufscheibe 8.1-8.3 angeformt ist.

Weiterhin ist jedem der Dosierer 4.1-4.3 auf der Dosiererantriebswelle 5 ein erster Mitnehmer 9.1-9.3, ein zweiter Mitnehmer 10.1-10.3 und eine Distanzhülse 11.1-11.3 zugeordnet.

Der erste Mitnehmer 9.1-9.3 der einzelnen Dosierer 4.1-4.3 ist hierbei fest auf der Dosiererantriebswelle 5 montiert, d.h. die ersten Mitnehmer 9.1-9.3 sind drehstarr mit der Dosiererantriebswelle 5 verbunden und axial auf der Dosiererantriebswelle 5 fixiert.

Der zweite Mitnehmer 10.1-10.3 der einzelnen Dosierer 4.1-4.3 ist dagegen auf der Dosiererantriebswelle 5 drehbar und axial verschiebbar angeordnet.

Weiterhin ist zu erwähnen, dass die axiale Position der Distanzhülsen 11.1-11.3 bei den einzelnen Dosierern 4.1-4.3 bestimmt, ob der jeweilige Dosierer ein Fahrgassendosierer oder ein Normaldosierer ist. In diesem Ausführungsbeispiel sind die beiden Dosierer 4.2 und 4.3 als Normaldosierer konfiguriert, wohingegen der Dosierer 4.1 als Fahrgassendosierer konfiguriert ist.

Bei den beiden Normaldosierern 4.2, 4.3 ist die Distanzhülse 11.2 bzw. 11.3 deshalb seitlich neben den beiden Mitnehmern 9.2, 10.2 bzw. 9.3, 10.3 angeordnet, um die Dosierer 4.2, 4.3 als Normaldosierer zu konfigurieren.

Bei dem als Fahrgassendosierer konfigurierten Dosierer 4.1 ist die Distanzhülse 11.1 dagegen zwischen dem ersten Mitnehmer 9.1 und dem zweiten Mitnehmer 10.1 angeordnet.

Weiterhin ist zu erwähnen, dass die ersten Mitnehmer 9.1-9.3 und die zweiten Mitnehmer 10.1-10.3 jeweils stirnseitig eine Stirnverzahnung 12, 13 aufweisen, um die Mitnehmer 9.1-9.3 mit den Mitnehmern 10.1-10.3 drehstarr verbinden zu können.

Die Figuren 9A-9C zeigen ferner eine Hohlwelle 14, die bei jedem der Dosierer 4.1-4.3 vorgesehen ist und die Normaldosierräder 6.1-6.3 und die Feindosierräder 7.1-7.3 trägt. Hierzu sind auf der Mantelfläche der Hohlwelle 14 Axialstege 15 angeformt, die in entsprechende Vertiefungen in der Wellenbohrung der Normaldosierräder 6.1-6.3 und der Feindosierräder 7.1-7.3 eingreifen, um eine drehstarre Verbindung zu erzeugen.

Darüber hinaus weist die Hohlwelle 14 eine Innenverzahnung 16 auf, in die eine Außenverzahnung 17 bzw. 18 der Mitnehmer 9.1-9.3 bzw. 10.1-10.3 eingreifen kann, um eine drehstarre Verbindung herzustellen.

Es wurde bereits vorstehend erwähnt, dass die Dosiererantriebswelle 5 axial verschiebbar ist, um entweder eine Grundstellung oder eine Fahrgassenstellung einzustellen. Im Folgenden wird nun zunächst die Grundstellung beschrieben, die in den Figuren 3A-6A dargestellt ist.

In der Grundstellung befindet sich die Dosiererantriebswelle 5 in einer axialen Stellung, in der bei allen Dosierern 4.1-4.3 jeweils der erste Mitnehmer 9.1-9.3 mit seiner Außenverzahnung 17 in einem formschlüssigen Eingriff steht mit der Innenverzahnung 16 der Hohlwelle 14. Dies bedeutet, dass die Dosiererantriebswelle 5 in ihrer Grundstellung drehstarr mit der Hohlwelle 14 verbunden ist, so dass alle Feindosierräder 7.1-7.3 und alle Normaldosierräder 6.1-6.3 gedreht werden. Dies gilt sowohl für die als Normaldosierer konfigurierten Dosierer 4.2, 4.3 als auch für den als Fahrgassendosierer konfigurierten Dosierer 4.1.

Im Folgenden wird nun die Fahrgassenstellung beschrieben, die in den Figuren 3B-6B dargestellt ist.

In der Fahrgassenstellung ist die Dosiererantriebswelle 5 gegenüber der Grundstellung nach rechts verschoben. Dies hat zur Folge, dass bei dem als Fahrgassendosierer konfigurierten Dosierer 4.1 die Distanzhülse 11.1 axial in Deckung mit der Innenverzahnung 16 der Hohlwelle 14 liegt. Die Distanzhülsen 11.1-11.3 haben jedoch keine Außenverzahnung. Dies hat zur Folge, dass die Hohlwelle 14 bei dem als Fahrgassendosierer konfigurierten Dosierer 4.1 in der Fahrgassenstellung der Dosiererantriebswelle 5 nicht gedreht wird.

Bei den beiden anderen Dosierern 4.2, 4.3 ist der erste Mitnehmer 9.2, 9.3 axial nach rechts versetzt gegenüber der Innenverzahnung 16 der Hohlwelle 14. Allerdings befindet sich dann der andere Mitnehmer 10.2, 10.3 axial in Deckung mit der Innenverzahnung 16 der Hohlwelle 14, so dass der zweite Mitnehmer 10.2, 10.3 drehstarr mit der zugehörigen Hohlwelle 14 verbunden ist. Darüber hinaus sind bei den beiden Dosierern 4.2, 4.3 auch die beiden Mitnehmer 9.2, 10.2 und 9.3, 10.3 durch die Stirnverzahnung 12, 13 drehstarr miteinander verbunden. Die Dosiererantriebswelle 5 dreht also zunächst die beiden fest montierten ersten Mitnehmer 9.2, 9.3, die aufgrund der Stirnverzahnung 12, 13 die zweiten Mitnehmer 10.2,10.3 mitnehmen, die dann wiederum die zugehörige Hohlwelle 14 mitnehmen. Im Ergebnis werden also in der Fahrgassenstellung die beiden Dosierer 4.2, 4.3 angetrieben, wohingegen der Dosierer 4.1 in der Fahrgassenstellung nicht angetrieben wird.

Die Konfiguration der einzelnen Dosierer 4.1-4.3 entweder als Fahrgassendosierer oder als Normaldosierer lässt sich hierbei einfach ändern, indem die Distanzhülsen 11.1-11.3 an passender Stelle auf der Dosiererantriebswelle 5 positioniert werden. Diese Umkonfiguration ist ohne Werkzeug und einfach möglich.

Die Figuren 10A-10C zeigen verschiedene Ansichten der baugleichen Distanzhülse 11.1-11.3 mit einem axial durchgehenden Schlitz 19, der es ermöglicht, die Distanzhülsen 11.1 -11.3 seitlich auf die Dosiererantriebswelle 5 aufzuklemmen oder von der Dosiererantriebswelle 5 abzunehmen.

Figur 11 zeigt eine schematische Darstellung zur Veranschaulichung der Steuerung der erfindungsgemäßen Drillmaschine 1.

Hierfür weist die Drillmaschine 1 eine Steuereinrichtung 20 auf, die sowohl einen Rotationsantrieb 21 als auch einen Linearantrieb 22 ansteuert.

Eingangsseitig ist die Steuereinrichtung 20 mit einem satellitengesteuerten Positionsbestimmungssystem 23 verbunden, wobei das Positionsbestimmungssystem 23 die Position der Drillmaschine 1 auf dem Feld an die Steuereinrichtung 20 meldet.

Darüber hinaus ist die Steuereinrichtung 20 eingangsseitig mit einem Applikationskartenspeicher 24 verbunden, der in herkömmlicher Weise eine gespeicherte Applikationskarte enthält. Die Applikationskarte gibt positionsabhängig Vorgaben für die Betriebsweise der Drillmaschine 1 und meldet diese an die Steuereinrichtung 20.

Die Steuereinrichtung 20 steuert dann den Rotationsantrieb 21 und den Linearantrieb 22 in Abhängigkeit von der aktuellen Position der Drillmaschine1 einerseits und in Abhängigkeit von der gespeicherten Applikationskarte andererseits an.

### Bezugszeichenliste

- 1: Drillmaschine
- 2: Vorratsbehälter für Saatgut
- 3: Dosiereinrichtung
- 3.1-3.2: Dosiererreihen
- 4.1-4.3: Dosierer
- 5: Dosiererantriebswelle
- 6.1-6.3: Normaldosierrad
- 7.1-7.3: Feindosierrad
- 8.1-8.3: Anlaufscheibe am Feindosierrad
- 9.1-9.3: Mitnehmer, fest montiert auf der Dosiererantriebswelle
- 10.1-10.3: Mitnehmer, drehbar und axial verschiebbar auf der Dosiererantriebswelle
- 11.1-11.3: Distanzhülsen
- 12: Stirnverzahnung im fixierten Mitnehmer
- 13: Stirnverzahnung im beweglichen Mitnehmer
- 14: Hohlwelle, die die Dosierräder trägt
- 15: Axialsteg auf der Hohlwelle zur Mitnahme der Dosierräder
- 16: Innenverzahnung der Hohlwelle
- 17: Außenverzahnung der fixierten Mitnehmer
- 18: Außenverzahnung der beweglichen Mitnehmer
- 19: Schlitz in der Distanzhülse
- 20: Steuereinrichtung
- 21: Rotationsantrieb zum Drehen der Dosiererantriebswelle
- 22: Linearantrieb zum Verschieben der Dosiererantriebswelle
- 23: Satellitengestütztes Positionsbestimmungssystem
- 24: Applikationskartenspeicher

## Patentansprüche

1. Dosiereinrichtung (3) zum Dosieren von Dosiergut, insbesondere zum Dosieren von Saatgut in einer Drillmaschine (1), mit
a) mehreren Dosierern (4.1-4.3) mit jeweils mindestens einem drehbaren Dosierrad (6.1-6.3, 7.1-7.3) zum Dosieren des Dosierguts, insbesondere mit jeweils einem Feindosierrad (7.1-7.3) und jeweils einem Normaldosierrad (6.1-6.3), und
b) einer drehbaren Dosiererantriebswelle (5) zum gemeinsamen Antrieb der Dosierräder (6.1-6.3, 7.1-7.3) der Dosierer (4.1-4.3), wobei die Dosierräder (6.1-6.3, 7.1-7.3) auf der gemeinsamen Dosiererantriebswelle (5) angeordnet sind, wobei
c) die Dosiererantriebswelle (5) axial verschiebbar ist, um in Abhängigkeit von der axialen Stellung der Dosiererantriebswelle (5) eine von mehreren Betriebsarten der Dosiereinrichtung (3) einzustellen,
**gekennzeichnet durch zumindest einen der folgenden Merkmalskomplexe d) und/oder e1) bis e5):**
d) dass die Dosiererantriebswelle (5) mehrere Konfigurationselemente (11.1-11.3) trägt, die den einzelnen Dosierern (4.1-4.3) zugeordnet sind und festlegen, welcher der Dosierer (4.1-4.3) ein Fahrgassendosierer ist, und/oder
e1) dass in einem Fahrgassenbetrieb mindestens einer der Dosierer (4.1-4.3) als Fahrgassendosierer nicht angetrieben wird, damit dieser in einer Fahrgasse auf einem Acker kein Dosiergut abgibt, während die anderen Dosierer (4.1-4.2) als Normaldosierer auch in dem Fahrgassenbetrieb angetrieben werden, um das Dosiergut abzugeben,
e2) dass in einem Normalbetrieb jeder der Dosierer (4.1-4.3) angetrieben wird, um das Dosiergut abzugeben,
e3) dass die Dosiererantriebswelle (5) axial verschiebbar ist zwischen einer Fahrgassenstellung für den Fahrgassenbetrieb und einer Grundstellung für den Normalbetrieb, und
e4) dass die Dosiererantriebswelle (5) in der Grundstellung alle Dosierer (4.1-4.3) einschließlich dem Fahrgassendosierer antreibt, so dass alle Dosierer (4.1-4.3) das Dosiergut abgeben, und
e5) dass die Dosiererantriebswelle (5) in der Fahrgassenstellung den mindestens einen Fahrgassendosierer nicht antreibt, sondern nur die Normaldosierer.

2. Dosiereinrichtung (3) nach Anspruch 1, **dadurch gekennzeichnet,**
a) **dass** die einzelnen Dosierräder (6.1-6.3, 7.1-7.3) oder ein mit den Dosierrädern (6.1-6.3, 7.1-7.3) drehstarr verbundenes Zahnrad (14) jeweils eine Innenverzahnung (16) tragen,
b) **dass** die Dosiererantriebswelle (5) für die einzelnen Dosierer (4.1-4.3) jeweils einen ersten Mitnehmer (9.1-9.3) trägt, wobei der erste Mitnehmer (9.1-9.3)
b1) drehfest auf der Dosiererantriebswelle (5) montiert ist,
b2) axial auf der Dosiererantriebswelle (5) fixiert ist,
b3) eine Außenverzahnung (17) trägt, die in die Innenverzahnung (16) des zugehörigen Dosierrads (14) auf der Dosiererantriebswelle (5) eingreifen kann, um das Dosierrad (14) mitzunehmen,
b4) die Dosiererantriebswelle (5) vorzugsweise hülsenförmig umgibt, und/oder
c) **dass** die Dosiererantriebswelle (5) für die einzelnen Dosierer (4.1-4.3) jeweils einen zweiten Mitnehmer (10.1-10.3) aufweist, wobei der zweite Mitnehmer (10.1-10.3)
c1) axial auf der Dosiererantriebswelle (5) verschiebbar ist,
c2) relativ zu der Dosiererantriebswelle (5) drehbar ist,
c3) eine Außenverzahnung (18) trägt, die in die Innenverzahnung (16) des zugehörigen Dosierrads (14) auf der Dosiererantriebswelle (5) eingreifen kann, um das Dosierrad (14) mitzunehmen, und
c4) die Dosiererantriebswelle (5) vorzugsweise hülsenförmig umgibt, und/oder
d) **dass** der erste Mitnehmer (9.1-9.3) und der zweite Mitnehmer (10.1-10.3) jeweils eine Stirnverzahnung (12, 13) aufweisen, damit der drehfest auf der Dosiererantriebswelle (5) montierte erste Mitnehmer (9.1-9.3) den drehbar auf der Dosiererantriebswelle (5) montierten zweiten Mitnehmer (10.1-10.3) mitnehmen und drehen kann.

3. Dosiereinrichtung (3) nach Anspruch 1 oder 2, **dadurch gekennzeichnet,**
a) **dass** die Konfigurationselemente Distanzstücke (11.1-11.3) sind, wobei die axiale Position der Distanzstücke (11.1-11.3) entlang der Dosiererantriebswelle (5) bestimmt, welcher der Dosierer (4.1-4.3) ein Fahrgassendosierer ist, oder
b) **dass** die Konfigurationselemente formschlüssige Verbindungselemente sind, insbesondere Bolzen, um die Dosiererantriebswelle (5) drehstarr mit den Dosierrädern der Normaldosierer zu verbinden.

4. Dosiereinrichtung (3) nach Anspruch 3,
**dadurch gekennzeichnet,**
a) **dass** das Distanzstück (11.1-11.3) bei dem Fahrgassendosierer auf der Dosiererantriebswelle (5) zwischen dem ersten Mitnehmer (9.1-9.3) und dem zweiten Mitnehmer (10.1-10.3) angeordnet ist, und
b) **dass** die Distanzstücke (11.1-11.3) bei den Normaldosierern auf der Dosiererantriebswelle (5) jeweils axial neben dem ersten Mitnehmer (9.1-9.3) und dem zweiten Mitnehmer (10.1-10.3) angeordnet sind, die unmittelbar aneinander angrenzen und durch Stirnverzahnungen (12, 13) drehfest miteinander verbunden sind.

5. Dosiereinrichtung (3) nach einem der Ansprüche 3 bis 4, **dadurch gekennzeichnet,**
a) **dass** die einzelnen Distanzstücke (11.1-11.3) jeweils Distanzhülsen (11.1-11.3) sind, die einen axial durchgehenden Schlitz (19) haben und deshalb seitlich auf die Dosiererantriebswelle (5) aufgeklemmt oder von der Dosiererantriebswelle (5) abgenommen werden können, um die Distanzhülsen (11.1-11.3) an einer anderen Axialposition zu positionieren, und/oder
b) **dass** die Distanzhülsen (11.1-11.3) elastisch federnd sind, damit die Distanzhülsen (11.1-11.3) auf der Dosiererantriebswelle (5) festgeklemmt werden können und trotzdem von der Dosiererantriebswelle (5) abgenommen werden können, und/oder
c) **dass** der axial durchgehende Schlitz (19) in Umfangsrichtung der Distanzhülse (11.1-11.3) eine Breite aufweist, die kleiner ist als der Durchmesser der Dosiererantriebswelle (5), und/oder
d) **dass** die Distanzstücke (11.1-11.3) baugleich sind, um einen Austausch untereinander zu ermöglichen, und/oder
e) **dass** die Distanzstücke (11.1-11.3) unterschiedliche Längen in axialer Richtung aufweisen, wobei die axiale Länge der Distanzstücke (11.1-11.3) an den axialen Abstand zwischen den Dosierern (4.1-4.3) angepasst ist.

6. Dosiereinrichtung (3) nach einem der Ansprüche 3 bis 5, **dadurch gekennzeichnet, dass** die einzelnen Distanzstücke (11.1-11.3) auf ihrer äußeren Mantelfläche keine Verzahnung aufweisen und die Innenverzahnung (16) der Dosierräder (6.1-6.3, 7.1-7.3) deshalb auch nicht mitnehmen, wenn sich die Distanzstücke (11.1-11.3) axial in Deckung mit den Innenverzahnungen (16) der Dosierräder (6.1-6.3, 7.1-7.3) befinden.

7. Dosiereinrichtung (3) nach einem der Ansprüche 5 bis 6, **dadurch gekennzeichnet,**
a) **dass** in der Grundstellung der Dosiererantriebswelle (5) alle Distanzhülsen (11.1-11.3) in axialer Richtung zu den Innenverzahnungen der Dosierräder (6.1-6.3, 7.1-7.3) versetzt sind und die ersten Mitnehmer mit ihrer Außenverzahnung in die Innenverzahnung (16) der Dosierräder (6.1-6.3, 7.1-7.3) eingreifen, so dass die Dosiererantriebswelle (5) in der Grundstellung alle Dosierräder (6.1-6.3, 7.1-7.3) dreht, und
b) **dass** in der Fahrgassenstellung der Dosiererantriebswelle (5) die Distanzhülse (11.1-11.3) des mindestens einen Fahrgassendosierers in axialer Richtung innerhalb der Innenverzahnung (16) eines der Dosierräder (6.1-6.3, 7.1-7.3) angeordnet ist, so dass das zugehörige Dosierrad (6.1-6.3, 7.1-7.3) von der Dosiererantriebswelle (5) nicht mitgenommen wird und auch der zugehörige Fahrgassendosierer kein Dosiergut dosiert.

8. Dosiereinrichtung (3) nach einem der Ansprüche 2 bis 7, **dadurch gekennzeichnet,**
a) **dass** die ersten Mitnehmer (9.1-9.3) und die zweiten Mitnehmer (10.1-10.3) jeweils axial eine Stirnverzahnung (12, 13) aufweisen, und/oder
b) **dass** die Stirnverzahnung (12, 13) eine Sägezahnverzahnung ist.

9. Dosiereinrichtung (3) nach einem der vorhergehenden Ansprüche, **dadurch gekennzeichnet,**
a) **dass** die Dosierer (4.1-4.3) in einer Dosiererreihe nebeneinander angeordnet sind, und vorzugsweise die Dosiererreihe im Wesentlichen horizontal verläuft und/oder die Dosierer (4.1-4.3) entlang der Dosiererreihe im Wesentlichen äquidistant angeordnet sind, und/oder
b) **dass** die Anzahl der Dosierer (4.1-4.3) größer ist als 1, 2, 3, 4, 6 oder 8, und/oder
c) **dass** die Dosiererantriebswelle (5) in mehreren Lagerschalen drehbar gelagert ist, insbesondere an jedem der Zahnräder auf der Dosiererantriebswelle (5), und/oder
d) **dass** ein Rotationsantrieb (21) vorgesehen ist, um die Dosiererantriebswelle (5) anzutreiben, und/oder
e) **dass** die Dosierer (4.1-4.3) alle ausschließlich von der gemeinsamen Dosiererantriebswelle (5) angetrieben werden, insbesondere ohne eine zusätzliche Antriebswelle für die Fahrgassendosierer.

10. Landwirtschaftliche Maschine (1), insbesondere Drillmaschine (1), mit einer Dosiereinrichtung (3) nach einem der vorhergehenden Ansprüche zum Dosieren des Dosierguts, insbesondere mit mehr als einem Fahrgassendosierer oder mehr als zwei Fahrgassendosierern, optional mit zwei, vier oder sechs Fahrgassendosierern.

11. Landwirtschaftliche Maschine nach Anspruch 10, **gekennzeichnet durch**
a) einen Linearantrieb (22) zum axialen Verschieben der Dosiererantriebswelle (5) zwischen der Fahrgassenstellung und der Grundstellung, und/oder
b) eine Steuereinrichtung (20) zur automatischen Ansteuerung des Linearantriebs (22) zur Verschiebung der Dosiererantriebswelle (5), insbesondere
b1) entsprechend einer Fahrgassenschaltung und/oder
b2) entsprechend einem vorgegebenen Fahrgassenrhythmus, so dass die Dosiererantriebswelle (5) in einer zeitlichen Abfolge entsprechend dem vorgegebenen Fahrgassenrhythmus entweder die Fahrgassenstellung oder die Grundstellung einnimmt, und/oder
c) ein Positionsbestimmungssystem (23), insbesondere ein satellitengestütztes Positionsbestimmungssystem (23), zur Bestimmung der Position der landwirtschaftlichen Maschine (1), wobei die Steuereinrichtung (20) den Linearantrieb (22) zur axialen Verschiebung der Dosiererantriebswelle (5) in Abhängigkeit von der ermittelten Position der landwirtschaftlichen Maschine (1) ansteuert, und/oder
c) einen Applikationskartenspeicher (24),
c1) wobei der Applikationskartenspeicher (24) eine gespeicherte Applikationskarte enthält,
c2) wobei die gespeicherte Applikationskarte die gewünschte Betriebsweise der landwirtschaftlichen Maschine in Abhängigkeit von der Position der landwirtschaftlichen Maschine vorgibt, und
c3) wobei die Steuereinrichtung (20) die gespeicherte Applikationskarte ausliest und den Linearantrieb (22) zur Verschiebung der Dosiererantriebswelle (5) in Abhängigkeit von der aktuellen Position der landwirtschaftlichen Maschine (1) und in Abhängigkeit von der gespeicherten Applikationskarte ansteuert.

## Claims

1. A metering apparatus (3) for metering material for metering, in particular for metering seeds in a seed drill (1), having
a) a plurality of metering devices (4.1-4.3) each having at least one rotatable metering wheel (6.1-6.3, 7.1-7.3) for metering the material for metering, in particular each having a fine-metering wheel (7.1-7.3) and each having a normal-metering wheel (6.1-6.3), and
b) a rotatable metering drive shaft (5) for jointly driving the metering wheels (6.1-6.3, 7.1-7.3) of the metering devices (4.1-4.3), wherein the metering wheels (6.1-6.3, 7.1-7.3) are arranged on the common metering drive shaft (5), wherein
c) the metering drive shaft (5) is axially displaceable in order to set one of a plurality of types of operation of the metering apparatus (3) depending on the axial position of the metering drive shaft (5),
**characterized by** at least one of the following complexes of features d) and/or e1) to e5):
d) that the metering drive shaft (5) supports a plurality of configuration elements (11.1-11.3) which are assigned to the individual metering devices (4.1-4.3) and determine which of the metering devices (4.1-4.3) is a tramline metering device, and/or
e1) that, in a tramline mode, at least one of the metering devices (4.1-4.3) is not operated as a tramline metering device so that it does not dispense any material for metering in a tramline in a field, while the other metering devices (4.1-4.2) are also driven as normal metering devices in the tramline mode in order to dispense the material for metering,
e2) that, in a normal mode, each of the metering devices (4.1-4.3) is driven in order to dispense the material for metering,
e3) that the metering drive shaft (5) is axially displaceable between a tramline position for the tramline mode and a basic position for the normal mode, and
e4) that the metering drive shaft (5) in the basic position drives all of the metering devices (4.1-4.3), including the tramline metering device, and therefore all of the metering devices (4.1-4.3) dispense the material for metering, and
e5) that the metering drive shaft (5) in the tramline position only drives the normal metering devices rather than the at least one tramline metering device.

2. The metering apparatus (3) according to Claim 1, **characterized**
a) **in that** the individual metering wheels (6.1-6.3, 7.1-7.3) or a gearwheel (14) connected rigidly in terms of rotation to the metering wheels (6.1-6.3, 7.1-7.3) in each case bear an internal toothing (16),
b) **in that** the metering drive shaft (5) for the individual metering devices (4.1-4.3) in each case bears a first driver (9.1-9.3), wherein the first driver (9.1-9.3)
b1) is mounted on the metering drive shaft (5) for rotation therewith,
b2) is fixed axially on the metering drive shaft (5),
b3) bears an external toothing (17) which can engage in the internal toothing (16) of the associated metering wheel (14) on the metering drive shaft (5) in order to carry along the metering wheel (14),
b4) surrounds the metering drive shaft (5) preferably in a sleeve-shaped manner, and/or
c) **in that** the metering drive shaft (5) for the individual metering devices (4.1-4.3) in each case has a second driver (10.1-10.3), wherein the second driver (10.1-10.3)
c1) is axially displaceable on the metering drive shaft (5),
c2) is rotatable relative to the metering drive shaft (5),
c3) bears an external toothing (18) which can engage in the internal toothing (16) of the associated metering wheel (14) on the metering drive shaft (5) in order to carry along the metering wheel (14), and
c4) surrounds the metering drive shaft (5) preferably in a sleeve-shaped manner, and/or
d) **in that** the first driver (9.1-9.3) and the second driver (10.1-10.3) each have a spur toothing (12, 13) so that the first driver (9.1-9.3) mounted on the metering drive shaft (5) for rotation therewith can carry along and rotate the second driver (10.1-10.3) mounted rotatably on the metering drive shaft (5).

3. The metering apparatus (3) according to Claim 1 or 2, **characterized**
a) **in that** the configuration elements are spacers (11.1-11.3), wherein the axial position of the spacers (11.1-11.3) along the metering drive shaft (5) determines which of the metering devices (4.1-4.3) is a tramline metering device, or
b) **in that** the configuration elements are form-fitting connecting elements, in particular bolts, in order to connect the metering drive shaft (5) rigidly in terms of rotation to the metering wheels of the normal metering devices.

4. The metering apparatus (3) according to Claim 3, **characterized**
a) **in that** the spacer (11.1-11.3) in the tramline metering device is arranged on the metering drive shaft (5) between the first driver (9.1-9.3) and the second driver (10.1-10.3), and
b) **in that** the spacers (11.1-11.3) in the normal metering devices are each arranged on the metering drive shaft (5) axially next to the first driver (9.1-9.3) and the second driver (10.1-10.3) which are directly adjacent to one another and are connected to one another for conjoint rotation by spur toothings (12, 13).

5. The metering apparatus (3) according to one of Claims 3 to 4, **characterized**
a) **in that** the individual spacers (11.1-11.3) each have spacer sleeves (11.1-11.3) which have an axially continuous slot (19) and can therefore be clamped laterally onto the metering drive shaft (5) or can be removed from the metering drive shaft (5) in order to position the spacer sleeves (11.1-11.3) at a different axial position, and/or
b) **in that** the spacer sleeves (11.1-11.3) are elastically resilient so that the spacer sleeves (11.1-11.3) can be firmly clamped on the metering drive shaft (5) and can nevertheless be removed from the metering drive shaft (5), and/or
c) **in that** the axially continuous slot (19) in the circumferential direction of the spacer sleeve (11.1-11.3) has a width which is smaller than the diameter of the metering drive shaft (5), and/or
d) **in that** the spacers (11.1-11.3) are structurally identical in order to enable them to be interchanged, and/or
e) **in that** the spacers (11.1-11.3) have different lengths in the axial direction, wherein the axial length of the spacers (11.1-11.3) is adapted to the axial distance between the metering devices (4.1-4.3).

6. The metering apparatus (3) according to one of Claims 3 to 5, **characterized in that** the individual spacers (11.1-11.3) do not have a toothing on their outer circumferential surface and therefore also do not carry along the internal toothing (16) of the metering wheels (6.1-6.3, 7.1-7.3) when the spacers (11.1-11.3) are axially in alignment with the internal toothings (16) of the metering wheels (6.1-6.3, 7.1-7.3).

7. The metering apparatus (3) according to one of Claims 5 to 6, **characterized**
a) **in that**, in the basic position of the metering drive shaft (5), all of the spacer sleeves (11.1-11.3) are offset in the axial direction with respect to the internal toothings of the metering wheels (6.1-6.3, 7.1-7.3) and the first drivers engage with their external toothing in the internal toothing (16) of the metering wheels (6.1-6.3, 7.1-7.3) such that the metering drive shaft (5) in the basic position rotates all of the metering wheels (6.1-6.3, 7.1-7.3), and
b) **in that**, in the tramline position of the metering drive shaft (5), the spacer sleeve (11.1-11.3) of the at least one tramline metering device is arranged in the axial direction within the internal toothing (16) of one of the metering wheels (6.1-6.3, 7.1-7.3) such that the associated metering wheel (6.1-6.3, 7.1-7.3) is not carried along by the metering drive shaft (5) and also the associated tramline metering device does not meter any material for metering.

8. The metering apparatus (3) according to one of Claims 2 to 7, **characterized**
a) **in that** the first drivers (9.1-9.3) and the second drivers (10.1-10.3) in each case axially have a spur toothing (12, 13), and/or
b) **in that** the spur toothing (12, 13) is a serrated toothing.

9. The metering apparatus (3) according to one of the preceding claims, **characterized**
a) **in that** the metering devices (4.1-4.3) are arranged next to one another in a metering row, and preferably the metering row runs substantially horizontally, and/or the metering devices (4.1-4.3) are arranged substantially equidistantly along the metering row, and/or
b) **in that** the number of metering devices (4.1-4.3) is greater than 1, 2, 3, 4, 6 or 8, and/or
c) **in that** the metering drive shaft (5) is mounted rotatably in a plurality of bearing shells, in particular on each of the gearwheels on the metering drive shaft (5), and/or
d) **in that** a rotational drive (21) is provided in order to drive the metering drive shaft (5), and/or
e) **in that** the metering devices (4.1-4.3) are all exclusively driven by the common metering drive shaft (5), in particular without an additional drive shaft for the tramline metering devices.

10. An agricultural machine (1), in particular a seed drill (1), having a metering apparatus (3) according to one of the preceding claims for metering the material for metering, in particular having more than one tramline metering device or more than two tramline metering devices, optionally having two, four or six tramline metering devices.

11. The agricultural machine according to Claim 10, **characterized by**
a) a linear drive (22) for axially displacing the metering drive shaft (5) between the tramline position and the basic position, and/or
b) a control device (20) for automatically activating the linear drive (22) for displacing the metering drive shaft (5), in particular
b1) corresponding to a tramline shut-off, and/or
b2) corresponding to a predefined tramline rhythm such that the metering drive shaft (5) either takes up the tramline position or the basic position in a temporal sequence corresponding to the predefined tramline rhythm, and/or
c) a position-determining system (23), in particular a satellite-assisted position-determining system (23), for determining the position of the agricultural machine (1), wherein the control device (20) activates the linear drive (22) for axially displacing the metering drive shaft (5) depending on the identified position of the agricultural machine (1), and/or
c) an application map memory (24),
c1) wherein the application map memory (24) contains a stored application map,
c2) wherein the stored application map predefines the desired operation of the agricultural machine depending on the position of the agricultural machine, and
c3) wherein the control device (20) reads the stored application map and activates the linear drive (22) for displacing the metering drive shaft (5) depending on the current position of the agricultural machine (1) and depending on the stored application map.

## Revendications

1. Dispositif de dosage (3) pour le dosage de produits à doser, en particulier pour le dosage de semences dans un semoir (1), avec
a) plusieurs doseurs (4.1-4.3) avec chacun au moins une roue de dosage rotative (6.1-6.3, 7.1-7.3) pour doser le produit à doser, en particulier ayant chacun une roue de dosage fin (7.1-7.3) et chacun une roue de dosage normal (6.1-6.3), et
b) un arbre (5) d'entraînement de doseur rotatif pour l'entraînement commun des roues de dosage (6.1-6.3, 7.1-7.3) des doseurs (4.1-4.3), les roues de dosage (6.1-6.3, 7.1-7.3) étant agencées sur l'arbre (5) d'entraînement de doseur commun,
c) l'arbre (5) d'entraînement du doseur est déplaçable axialement afin de régler l'un parmi plusieurs modes de fonctionnement du dispositif de dosage (3) en fonction de la position axiale de l'arbre (5) d'entraînement du doseur,
**caractérisé par** au moins l'un des complexes de caractéristiques suivants d) et/ou e1) à e5) :
d) l'arbre (5) d'entraînement du doseur porte plusieurs éléments de configuration (11.1-11.3) qui sont associés aux différents doseurs (4.1-4.3) et qui déterminent lequel des doseurs (4.1-4.3) est un doseur de jalonnage, et/ou
e1) dans un mode de jalonnage, au moins l'un des doseurs (4.1-4.3) n'est pas entraîné en tant que doseur de jalonnage, afin que celui-ci ne délivre pas de produit dosé dans une voie de jalonnage sur un champ, tandis que les autres doseurs (4.1-4.2) sont entraînés en tant que doseurs normaux également dans le mode de jalonnage, afin de délivrer le produit dosé,
e2) dans un fonctionnement normal, chacun des doseurs (4.1-4.3) est entraîné de façon à distribuer le produit dosé,
e3) l'arbre (5) d'entraînement du doseur est déplaçable axialement entre une position de jalonnage pour le fonctionnement en jalonnage et une position de base pour le fonctionnement normal, et
e4) l'arbre (5) d'entraînement du doseur entraîne, dans la position de base, tous les doseurs (4.1-4.3), y compris le doseur de jalonnage, de sorte que tous les doseurs (4.1-4.3) délivrent le produit dosé, et
e5) l'arbre (5) d'entraînement du doseur n'entraîne pas ledit au moins un doseur de jalonnage dans la position de jalonnage, mais seulement les doseurs normaux.

2. Dispositif de dosage (3) selon la revendication 1, caractérisé
a) en ce que les différentes roues de dosage (6.1-6.3, 7.1-7.3) ou une roue dentée (14) solidaire en rotation avec les roues de dosage (6.1-6.3, 7.1-7.3) portent chacune une denture intérieure (16),
b) en ce que l'arbre d'entraînement (5) du doseur porte un premier organe d'entraînement (9.1-9.3) pour chacun des doseurs (4.1-4.3), le premier organe d'entraînement (9.1-9.3)
b1) étant monté solidairement en rotation sur l'arbre (5) d'entraînement du doseur,
b2) étant fixé axialement sur l'arbre (5) d'entraînement du doseur,
b3) portant une denture extérieure (17) qui est apte à s'engrener dans la denture intérieure (16) de la roue de dosage (14) correspondante sur l'arbre (5) d'entraînement du doseur afin d'entraîner la roue de dosage (14),
b4) entourant l'arbre d'entraînement de doseur (5) de préférence par une forme de manchon, et/ou
c) en ce que l'arbre d'entraînement de doseur (5) présente pour chacun des doseurs individuels (4.1-4.3) un deuxième organe d'entraînement (10.1-10.3), le deuxième organe d'entraînement (10.1-10.3)
c1) étant déplaçable axialement sur l'arbre (5) d'entraînement du doseur,
c2) étant apte à tourner par rapport à l'arbre (5) d'entraînement du doseur,
c3) portant une denture extérieure (18) qui est apte à s'engrener dans la denture intérieure (16) de la roue de dosage (14) correspondante sur l'arbre (5) d'entraînement du doseur afin d'entraîner la roue de dosage (14), et
c4) entourant l'arbre d'entraînement de doseur (5) de préférence par une forme de manchon, et/ou
d) en ce que le premier organe d'entraînement (9.1-9.3) et le deuxième organe d'entraînement (10.1-10.3) présentent chacun une denture frontale (12, 13), afin que le premier organe d'entraînement (9.1-9.3), monté de manière solidaire en rotation sur l'arbre (5) d'entraînement du doseur, puisse entraîner et faire tourner le deuxième organe d'entraînement (10.1-10.3), monté de manière rotative sur l'arbre (5) d'entraînement du doseur.

3. Dispositif de dosage (3) selon la revendication 1 ou 2, **caractérisé**
a) **en ce que** les éléments de configuration sont des entretoises (11.1-11.3), la position axiale des entretoises (11.1-11.3) le long de l'arbre (5) d'entraînement du doseur déterminant lequel des doseurs (4.1-4.3) est un doseur de jalonnage, ou
b) **en ce que** les éléments de configuration sont des éléments de liaison par complémentarité de forme, en particulier des boulons, afin de lier en rotation l'arbre (5) d'entraînement du doseur aux roues de dosage des doseurs normaux.

4. Dispositif de dosage (3) selon la revendication 3, **caractérisé**
a) **en ce que** l'entretoise (11.1-11.3) est agencée sur l'arbre d'entraînement (5) du doseur de jalonnage entre le premier organe d'entraînement (9.1-9.3) et le deuxième organe d'entraînement (10.1-10.3), et
b) **en ce que** les entretoises (11.1-11.3) sont agencées, dans le cas des doseurs normaux, sur l'arbre d'entraînement (5) du doseur, respectivement axialement à côté du premier organe d'entraînement (9.1-9.3) et du deuxième organe d'entraînement (10.1-10.3), qui sont directement adjacents l'un à l'autre et sont reliés entre eux de manière solidaire en rotation par des dentures frontales (12, 13).

5. Dispositif de dosage (3) selon l'une des revendications 3 à 4, **caractérisé**
a) **en ce que** les différentes entretoises (11.1-11.3) sont chacune des douilles d'écartement (11.1-11.3) qui ont une fente (19) traversant axialement et qui sont aptes à donc être serrées latéralement sur l'arbre (5) d'entraînement du doseur ou retirées de l'arbre (5) d'entraînement du doseur pour positionner les douilles d'écartement (11.1-11.3) dans une autre position axiale, et/ou
b) **en ce que** les douilles d'écartement (11.1-11.3) sont élastiques, de sorte que les douilles d'écartement (11.1-11.3) sont aptes à être serrées sur l'arbre (5) d'entraînement du doseur tout en étant aptes à être retirées de l'arbre (5) d'entraînement du doseur, et/ou
c) **en ce que** la fente (19) continue axialement présente, dans la direction circonférentielle de la douille d'écartement (11.1-11.3), une largeur inférieure au diamètre de l'arbre (5) d'entraînement du doseur, et/ou
d) **en ce que** les entretoises (11.1-11.3) sont de construction identique afin de permettre un échange des unes par les autres, et/ou
e) **en ce que** les entretoises (11.1-11.3) présentent des longueurs différentes dans la direction axiale, la longueur axiale des entretoises (11.1-11.3) étant adaptée à la distance axiale entre les doseurs (4.1-4.3).

6. Dispositif de dosage (3) selon l'une des revendications 3 à 5, **caractérisé en ce que** les différentes entretoises (11.1-11.3) ne présentent pas de denture sur leur surface d'enveloppe extérieure et n'entraînent donc pas la denture intérieure (16) des roues de dosage (6.1-6.3, 7.1-7.3), même lorsque les entretoises (11.1-11.3) se trouvent axialement en coïncidence avec les dentures intérieures (16) des roues de dosage (6.1-6.3, 7.1-7.3).

7. Dispositif de dosage (3) selon l'une des revendications 5 à 6, **caractérisé**
a) **en ce que** dans la position de base de l'arbre (5) d'entraînement du doseur, toutes les douilles d'écartement (11.1-11.3) sont orientées dans le sens axial par rapport aux dentures intérieures des roues de dosage (6.1-6.3, 7.1-7.3) sont décalées et que les premiers organes d'entraînement s'engrènent avec leur denture extérieure dans la denture intérieure (16) des roues de dosage (6.1-6.3, 7.1-7.3), de sorte que l'arbre (5) d'entraînement du doseur tourne toutes les roues de dosage (6.1-6.3, 7.1-7.3) dans la position initiale, et
b) **en ce que** dans la position de jalonnage de l'arbre (5) d'entraînement du doseur, la douille d'écartement (11.1-11.3) du au moins un doseur de jalonnage se trouve dans le sens axial à l'intérieur de la denture intérieure (16) de l'une des roues de dosage (6.1-6.3, 7.1-7.3), de sorte que la roue de dosage associée (6.1-6.3, 7.1-7.3) ne soit pas entraînée par l'arbre (5) d'entraînement du doseur et que le doseur de jalonnage associé ne dose pas non plus de produit à doser.

8. Dispositif de dosage (3) selon l'une des revendications 2 à 7, **caractérisé**
a) **en ce que** les premiers organes d'entraînement (9.1-9.3) et les deuxièmes organes d'entraînement (10.1-10.3) présentent chacun axialement une denture frontale (12, 13), et/ou
b) **en ce que** la denture frontale (12, 13) est une denture en dents de scie.

9. Dispositif de dosage (3) selon l'une des revendications précédentes, **caractérisé**
a) **en ce que** les doseurs (4.1-4.3) sont agencés les uns à côté des autres dans une rangée de doseurs, et de préférence la rangée de doseurs s'étend sensiblement horizontalement et/ou les doseurs (4.1-4.3) sont agencés sensiblement à équidistance le long de la rangée de doseurs, et/ou
b) **en ce que** le nombre de doseurs (4.1-4.3) est supérieur à 1, 2, 3, 4, 6 ou 8, et/ou
c) **en ce que** l'arbre (5) d'entraînement du doseur est monté de manière rotative dans plusieurs coquilles de palier, en particulier sur chacune des roues dentées sur l'arbre (5) d'entraînement du doseur, et/ou
d) **en ce qu'**un entraînement rotatif (21) est prévu pour entraîner l'arbre (5) d'entraînement du doseur, et/ou
e) **en ce que** les doseurs (4.1-4.3) sont tous entraînés exclusivement par l'arbre (5) d'entraînement en commun des doseurs, notamment sans arbre d'entraînement supplémentaire pour les doseurs de jalonnage.

10. Machine agricole (1), notamment semoir (1), ayant un dispositif de dosage (3) selon l'une des revendications précédentes pour doser le produit à doser, notamment avec plus d'un doseur de jalonnage ou plus de deux doseurs de jalonnage, en option avec deux, quatre ou six doseurs de jalonnage.

11. Machine agricole selon la revendication 10, **caractérisée par**
a) un entraînement linéaire (22) pour le déplacement axial de l'arbre (5) d'entraînement du doseur entre la position de jalonnage et la position de base, et/ou
b) un dispositif de commande (20) pour la commande automatique de l'entraînement linéaire (22) pour le déplacement de l'arbre (5) d'entraînement du doseur, notamment
b1) selon une commande de jalonnage et/ou
b2) selon une cadence de jalonnage prédéfinie, de sorte que l'arbre (5) d'entraînement du doseur adopte soit la position de jalonnage, soit la position de base, dans une séquence temporelle correspondant à la cadence de jalonnage prédéfinie, et/ou
c) un système de détermination de position (23), en particulier un système de détermination de position (23) assisté par satellite, pour déterminer la position de la machine agricole (1), le dispositif de commande (20) commandant l'entraînement linéaire (22) pour le déplacement axial de l'arbre (5) d'entraînement du doseur en fonction de la position déterminée de la machine agricole (1), et/ou
c) une mémoire à carte d'application (24),
c1) la mémoire (24) à carte d'application contenant une carte d'application mémorisée,
c2) la carte d'application mémorisée prescrivant le mode de fonctionnement souhaité de la machine agricole en fonction de la position de la machine agricole, et
c3) le dispositif de commande (20) lisant la carte d'application mémorisée et commandant l'entraînement linéaire (22) pour déplacer l'arbre (5) d'entraînement du doseur en fonction de la position actuelle de la machine agricole (1) et en fonction de la carte d'application mémorisée.
